# EUROPEAN PATENT SPECIFICATION

(11) **EP 1 514 070 B1**
(45) Date of publication and mention of the grant of the patent: **23.04.2014**
(21) Application number: 03757400.1
(22) Date of filing: 05.06.2003
(51) Int. Cl.: F41C 23/00, F41G 3/02, F41C 27/00, F41G 3/16, G05D 1/00

(54) **REMOTE CONTROL MODULE FOR A VEHICLE**
FERNSTEUERMODUL FÜR EIN FAHRZEUG
MODULE DE TELECOMMANDE POUR VEHICULE

(30) Priority: 05.06.2002 US 162372
(43) Date of publication of application: 16.03.2005
(73) Proprietor: Lockheed Martin Corporation, Bethesda, MD 20817 (US)
(72) Inventor: BURNETT, Edward, L., Ventura, CA 93003 (US)
(74) Representative: Ertl, Nicholas Justin
(86) International application number: PCT/US2003/017942
(87) International publication number: WO 2003/104836

(56) References cited:
- WO-A-96/41998
- US-A- 3 868 883
- US-A- 3 912 197
- US-A- 3 974 984
- US-A- 4 852 457
- US-A- 5 106 033
- US-A- 5 552 983
- US-A- 5 555 662
- US-A- 5 584 137
- US-A- 5 822 905
- US-A- 5 824 942
- US-B1- 6 192 614

## Description

### BACKGROUND OF THE INVENTION

### Field of the Invention

The invention relates to the field of remote control modules for controlling vehicles such as small unmanned reconnaissance aircraft and the like and, in particular, to a remote control module that is mountable on a rifle or the like such that the operator can carry on other actions along with controlling the vehicle. The invention also can be used to control wire guided missiles and the like.

### Description of Related Art

The typical control module for controlling a small-unmanned aircraft or automobile is mounted in a hand held box. The box typically includes one or more "joysticks" and buttons, etc. The operator holds the box with one hand and operates the joystick with the other hand. When possible the box is placed on a support leaving both hands free to operate the controls. Another approach is to hold the control box with fingers and palm of the hand and to use the thumb to operate the joystick. Regardless of the method used, the operator is generally unable to simultaneously handle other tasks.

The problem of handling duel tasks has been addressed. For example, on certain helicopter gunships, the pilot, wearing a special helmet, can aim a remotely mounted machine gun by moving his or her head, leaving their hands free to fly the vehicle. The gun is fired by means of a trigger mounted on the control column. This concept is being expanded to include the control of a missile.

However, on the battlefield where troops may under fire, or at least under the threat of hostile fire, the individual operator must be ready to use his or her rifle at all times. The use of a rifle requires that the operator place the butt against his or her shoulder, have one hand on the trigger and trigger grip and the other hand on a forward handgrip, typically a plastic or wood mounted to the barrel. Thus an operator using the typical remote control module for a reconnaissance type micro-sized aircraft, which typically requires both hands to use. This would have the operator to "shoulder" the weapon or place it on the ground or hand it to a companion to hold. If the operator then came under enemy fire, he would have to store, drop or place the remote control module on the ground and bring the rifle to the firing position. In combat, such a delay could be fatal. This would be a greater problem if the operator was on the move during a patrol or the like.

Thus, it is a primary object of the invention to provide a control module for a vehicle.

It is another primary object of the invention to provide a control module for a vehicle that allows an operator under battlefield conditions to operate the control module while having his rifle ready for instantaneous use.

It is a further object of the invention to provide a control module for a vehicle that allows an operator under battlefield conditions to operate the control module with one hand on the trigger of his rifle and the other on the front stock, thus having his rifle ready for instantaneous use.

It is a still further object of the invention to provide a control module for a remotely controlled vehicle that is integrated with a rifle eliminating the need for a solder to carry a separate control module.

WO96/419 discloses a laser range finder that is modular so that it can be mounted on different weapon platforms. A pulsed infrared laser beam is reflected off the target. The timed return signal is then used to measure the distance. Another laser, either a visible laser or another infrared laser of differing frequency, is used to place a spot on the intended target. Notch pass optical filters serve to eliminate ambient light interference from the second laser. The range finder using projectile information stored in the unit processes the calculated distance to raise or lower the finder on the weapon. A plurality of weapon platforms and projectiles is selected by pressing the desired rubberized keypad. The range finder can be used with a laser detonated projectile that can be detonated when the projectile is over the target. The projectile is fitted with a detector that is sensitive to the frequency of a wide angle laser beam that is attached to the weapon. Using the range obtained by the range finder, the wide angle laser beam is fired when the projectile is in proper position relative to the target.

United states Patent Number US, 5,552,983 relates to the control of remotely operated vehicles. United States Patent Number US 5,584,137 discloses a laser sight that can be fitted on conventional handguns and rifles.

### SUMMARY OF THE INVENTION

In accordance with one aspect of the invention, there is provided an apparatus for controlling and monitoring the movement of a remote vehicle as defined by claim 1.

In one embodiment, a control module for controlling the movement of a vehicle, that can be mounted on a hand-held weapon such as a rifle is provided. In detail, the module includes a housing suitable for use as a forward handgrip for the weapon. A fastener system can be used to mount the housing on the weapon. The module includes an electronic control circuit mounted within the housing for controlling the vehicle. Vehicle control devices, such as a ball tracking devices, and on/off switches, are mounted on the housing in locations that are accessible by the operator while the operator is holding the weapon. The control devices are coupled to the electronic control circuit. Thus the operator of the module can simultaneously operate the weapon and control the vehicle.

In another embodiment, the module includes a display or other indicators to display information from the vehicle. For example, the vehicle can be equipped with a video camera or other equipment, and transmit information to the module. The module can also transmit control commands to the vehicle via the antenna or other suitable device. In addition, if the module transmits directly to the vehicle, an antenna is mounted on the housing coupled to the electronic circuit. If the vehicle is wire guided via a wire dispensing system, the module includes an electrical connector mounted on the housing for coupling the electronic control circuit to the wire dispensing system.

The features which are believed to be characteristic of embodiments of the invention, both as to configuration and method of operation, will be better understood from the following description in connection with the accompanying drawings in which embodiments of the invention are illustrated by way of example. It is to be expressly understood, however, that the drawings and description are for purposes of illustration and description only and are not intended limit the claims.

### BRIEF DESCRIPTION OF THE DRAWINGS

Figure 1 is view of operator holding a rifle with the module mounted thereon controlling a remote aircraft in flight.
Figure 2 is a side view of a rifle and in various states of disassembly.
Figure 3 is a perspective view of a first side of an embodiment of a module for remotely controlling a vehicle.
Figure 4 is a second perspective view of the module of Figure 3.
Figure 5 is a perspective view of another embodiment of the module installed on a rifle.
Figure 6 is a cross-sectional view of the module of Figure 5 taken along the line 5-5 illustrating the mounting of the module on a rifle.

### DESCRIPTION OF THE EMBODIMENTS

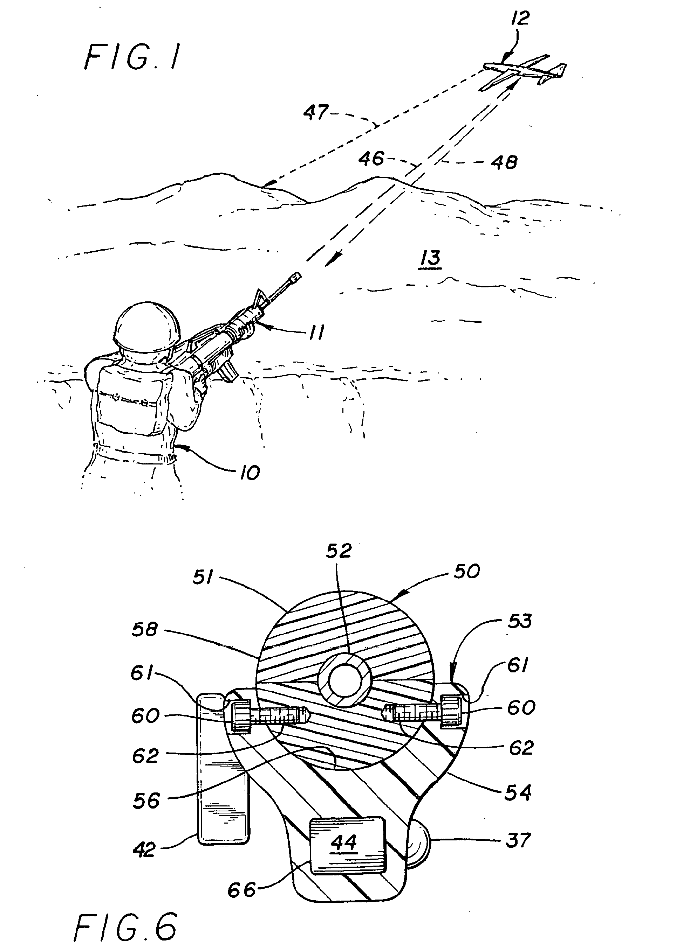

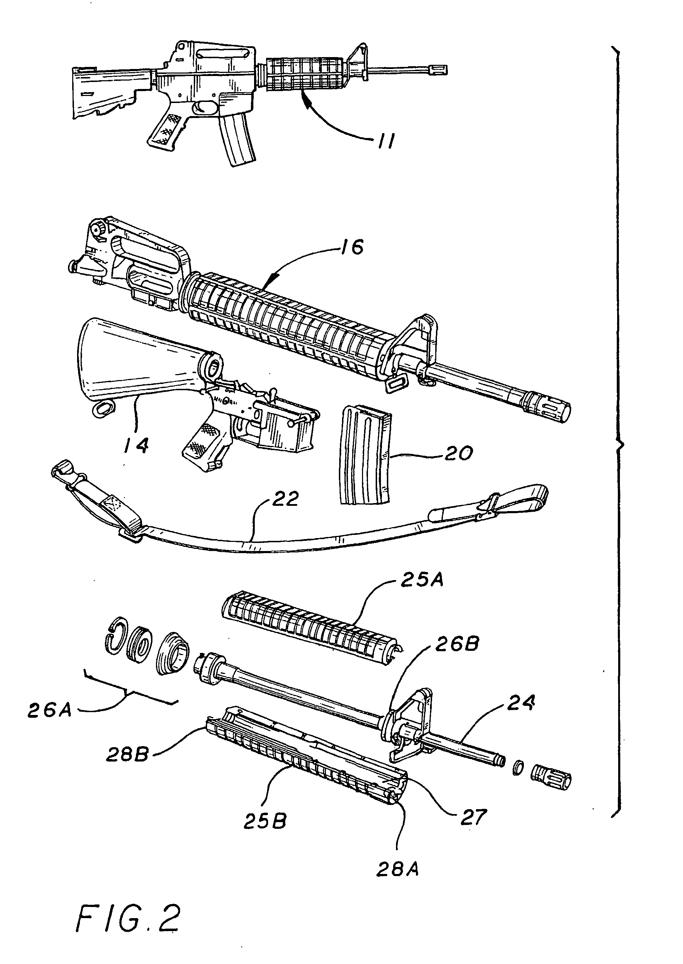

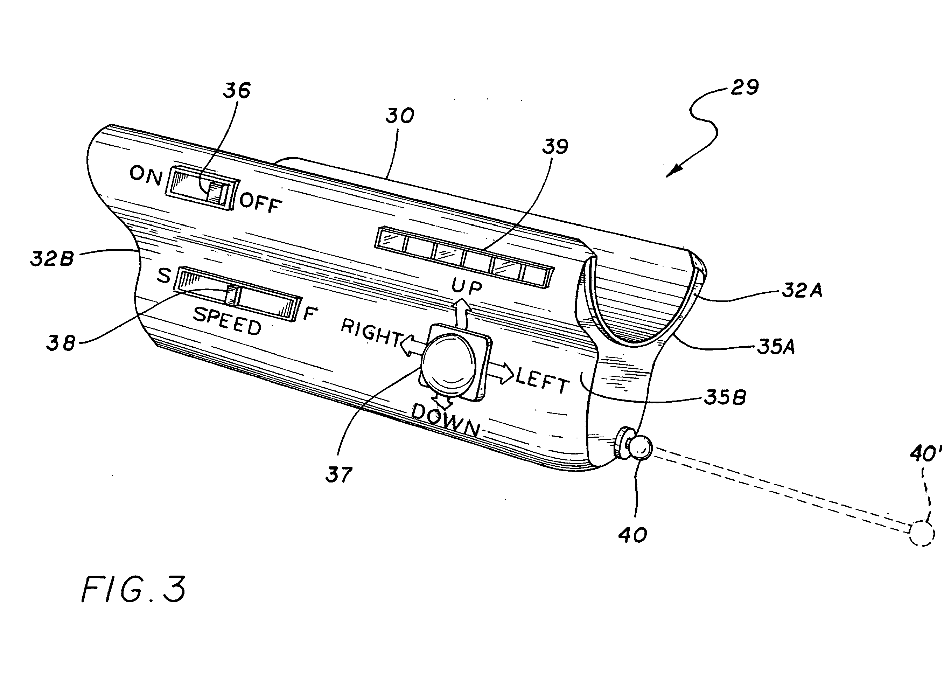

Referring to Figure 1 an operator 10 is shown holding a rifle 11, while a small battery powered reconnaissance aircraft 12 is shown flying over a hill 13. Referring to Figures 2 and 3, wherein an exemplary rifle 11 is illustrated, rifle 1 includes a receiver assembly and but stock 14, upper receiver and barrel assembly 16, magazine 20, and sling 22. Barrel assembly 16 further includes barrel 24, upper and lower forward handgrips 25A and 25B, and retainer assemblies 26A and 26B. The lower front handgrip 25B includes channel 27 for barrel 24 and front and rear ends 28A and 28B. Embodiments of module 29 can replace components on rifle 11, or be mounted to existing components on rifle 11.

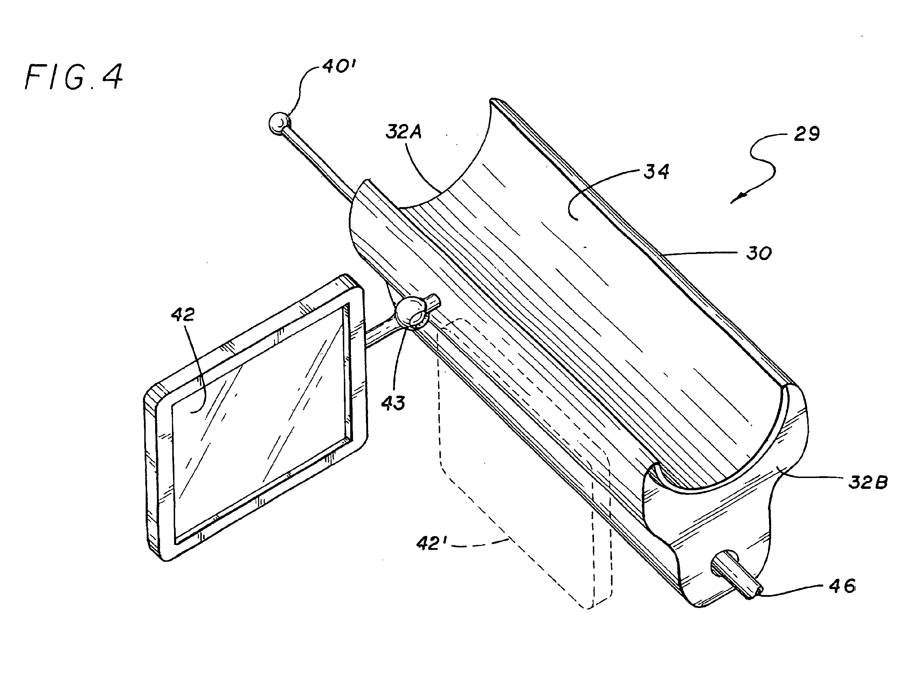

Referring to Figures 3 and 4, an embodiment of remote control module 29 designed to replace lower front handgrip 25B on rifle 11 includes a lower front handgrip 30. Handgrip 30 includes front and rear ends 32A and 32B, similar to ends 28A and 28B of lower handgrip 25B of rifle 11. A channel 34 is included, similar to channel 26 of lower front handgrip 25B, between left and right sides 35A, 35B of module 29.

Remote control module 29 can be designed to be gripped with the left or right hand of the operator. Features for controlling vehicle 12, such as the remote control function switches 37, 38 are located on module 29 to be accessed by the fingers of the operator while holding handgrip 30. Switches on remote control module 29 may include, for example, on/off switch 36; flight path control device 37 for controlling movement of the vehicle; speed control switch 38; and aircraft power level remaining indicator 39. Various types of switches and control such as discreet position on/off, roller ball, and sliding switches can be utilized. Other control switches and knobs can be incorporated to perform functions in addition to speed and position control, as required, for example, to control sensors and/or munitions on vehicle 12.

An antenna 40, extendable to the position indicated by numeral 40', can be mounted on front end 32A for communicating with vehicle 12.

Video screen 42 can be mounted on handgrip 30 with a moveable hinge 43. The video screen 42 is movable from the extended position shown to a retracted position, indicated in dotted lines and numeral 42'. However, the video screen 42 is optional and may not be included in some configurations.

Referring to Fig. 6, electrical components in remote control module 29 can be connected to an electronic control circuit 44 mounted within handgrip 30 by electrical lines (not shown) or other suitable connections.

Referring again to Figures 1-3, with the module 29 installed on rifle 11, the operator 10 can guide and monitor vehicle 12, while still maintaining rifle 11 in a position to defend his or herself. Control signals, indicated by dotted lines 46, are transmitted by the antenna 42' to the vehicle 12. Sensors, such as a video camera (not shown), can be mounted in the vehicle 12 to allow operator 10 to view the environment in a remote location, such as over hill 13 as indicated by dotted lines 47. Vehicle 12 transmits signals indicted by dotted lines 48 back to module 29 where video pictures are displayed on the video screen 42. Other sensor information can also be transmitted by vehicle 12, in addition to, or instead of video images, based on the sensors and other equipment configured in vehicle 12.

The use of the control device 36 allows precise control of the flight path of vehicle 12. If operator 10 is attacked, he or she will be able to use rifle 11 to take appropriate defensive action. In the past, operator 10 would have had to place rifle 11 on the ground or sling it over his or her back and hold a control module with both hands to control vehicle 12. Thus operator 10 would not be able to take offensive or defensive action as quickly. Furthermore, with module 29 installed on rifle 11, operator 10 does not need to carry any additional vehicle control equipment.

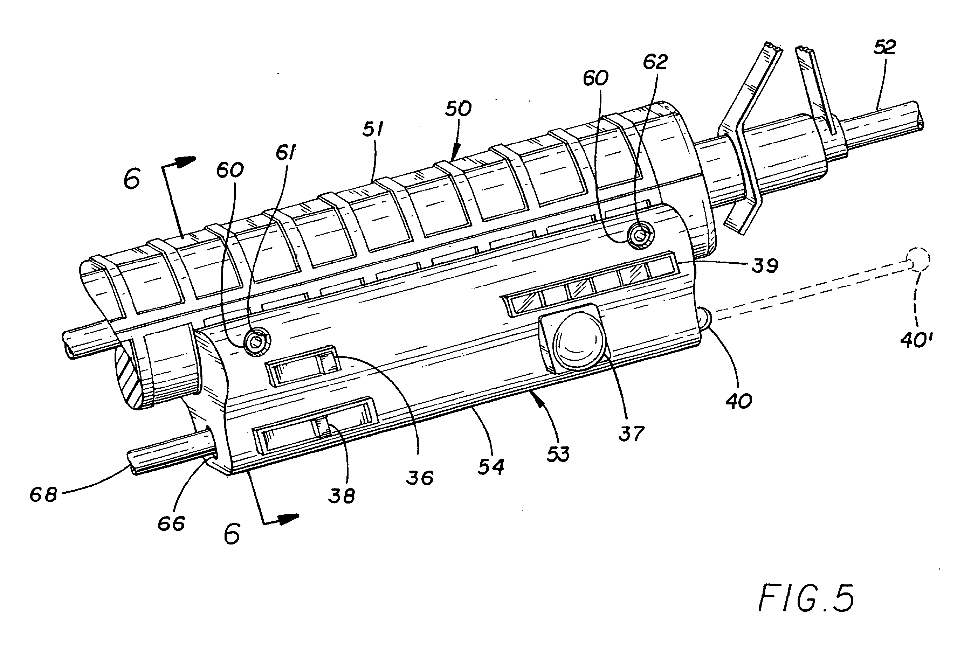

Figures 5 and 6 show another embodiment of remote control module 53 attachable to rifle 50 with forward handgrip 51 extending about barrel 52. Module 53 includes housing 54 having a recess 56 that mates with forward handgrip 51 of rifle 50. Remote control module 53 is attached to existing forward handgrip 51 by means of a suitable number of fasteners 60. In the embodiment shown, fasteners 60 extend through countersunk holes 61 in housing 54 and into threaded holes 62 in handgrip 51, respectively. Module 53 also includes on/off switch 36, flight path roller ball type control device 37 for controlling the flight path of vehicle 12, speed control sliding switch 38, power indicator 39, antenna 40, and video screen 42, all connected to electronic control circuit 44. Other control function switches and knobs, etc. may be incorporated as required.

In some embodiments, modules 29, 53 include electrical connector 66 connected to cable 68 for a wire guided missile launcher (not shown) or other guidance system. Modules 29, 53 can be used to guide other types of vehicles, and can incorporate other types of guidance systems. For example, modules 29, 53 can incorporate a laser designator (not shown) to designate an area for vehicle 12 to land, acquire images for reconnaissance, and/or destroy a target.

In summary, it has been demonstrated that control modules 29, 53 allows operator 10 to remotely control vehicle 12. Vehicle 12 can be any suitable type of apparatus, such as an aircraft, ground vehicle, or wire guided missile, to name a few. Operator 10 also can remain ready to immediately use his rifle 11, 50, if he or she comes under attack. In addition, a separate control module 29, 53 is no longer necessary.

While the invention has been described with reference to particular embodiments, it should be understood that the embodiments are merely illustrative, as there are numerous variations and modifications, which may be made by those skilled in the art. For example, module 29 can be configured to be mounted on other types of rifles, hand-held weapons, or devices other than weapons. Thus, the invention is to be construed as being limited only by the scope of the appended claims.

### INDUSTRIAL APPLICABILITY

The invention has applicability to industries involved in the manufacture of control modules for remotely controlled vehicles.

## Claims

1. A system for controlling the movement of a remote vehicle (12), the system comprising:
a hand-held weapon (11); and
a remote control module (29, 53) for controlling the movement of a vehicle (12), the module (29, 53) being mounted on the hand-held weapon (11), the module (29, 53) comprising:
a housing suitable for use as a forward hand grip for the weapon (11);
an electronic control circuit (44) mounted within the housing for controlling the vehicle (12); and
a vehicle control device coupled to the electronic control circuit (44) and mounted on the housing such that the operator of the module (29, 53) can simultaneously operate the weapon (11) and control the vehicle (12).

2. The system as set forth in claim 1 further comprising a display screen mounted on the housing and movable from a stored position flush against the housing to a viewing position extending from the housing.

3. The system as set forth in claim 1 further comprising:
an antenna mounted on the housing and coupled to the electronic control circuit (44), wherein the antenna is operable to transmit signals to the vehicle (12) and receive signals from the vehicle (12).

4. The system as set forth in claim 3 further comprising a laser designator mounted on the housing, wherein the laser designator is operable to indicate a position to which the vehicle (12) will maneuver.

5. The system as set forth in claim 3 further comprising a wire guidance system mounted in the housing for controlling the position of the vehicle (12).

6. The system as set forth in claim 1 further comprising:
a fastener for mounting the remote control module (29, 53) to the weapon (11).

7. The system as set forth in claim 3, wherein the signals from the vehicle (12) include video signals representing images from a sensor on the vehicle (12).

8. The system as set forth in claim 1, wherein the vehicle control device is configured to control the speed and direction of the vehicle (12) by the operator.

9. The system as set forth in claim 1 further comprising a power indicator to indicate the power remaining for the vehicle (12).

10. The system as set forth in claim 2 wherein the module (29, 53) is adapted to display video pictures received from the vehicle (12) on the display screen.

11. The system as set forth in claim 1 wherein the vehicle (12) is wire guided via a wire dispensing system, and the electronic control circuit (44) is coupled to the wire dispensing system.

## Patentansprüche

1. System zum Steuern der Bewegung eines entfernten Fahrzeugs (12), wobei das System folgendes umfasst:
eine Handwaffe (11); und
ein Fernsteuerungsmodul (29, 53) zum Steuern der Bewegung eines Fahrzeugs (12), wobei da Modul (29, 53) an der Handwaffe (11) angebracht ist, wobei das Modul (29, 53) folgendes umfasst:
ein Gehäuse, das sich zur Verwendung als ein vorderer Handgriff für die Waffe (11) eignet;
einen elektronischen Steuerkreis (44), der zur Steuerung des Fahrzeugs (12) in dem Gehäuse angeordnet ist; und
eine Fahrzeugsteuervorrichtung, die mit dem elektronischen Steuerkreis (44) gekoppelt und an dem Gehäuse angebracht ist, so dass die Bedienungsperson des Moduls (29, 53) gleichzeitig die Waffe (11) bedienen und das Fahrzeug (12) steuern kann.

2. System nach Anspruch 1, wobei dieses ferner einen Anzeigeschirm umfasst, der an dem Gehäuse angebracht ist und von einer Aufbewahrungsposition, die bündig an dem Gehäuse anliegt, an eine Betrachtungsposition, die sich von dem Gehäuse erstreckt, bewegt werden kann.

3. System nach Anspruch 1, wobei dieses ferner folgendes umfasst:
eine Antenne, die an dem Gehäuse angebracht und mit dem elektronischen Steuerkreis (44) gekoppelt ist, wobei die Antenne so betrieben werden kann, dass sie Signale zu dem Fahrzeug (12) übermittelt und Signale von dem Fahrzeug (12) empfängt.

4. System nach Anspruch 3, wobei dieses ferner einen Laserbezeichner umfasst, der an dem Gehäuse angebracht ist, wobei der Laserbezeichner so betrieben werden kann, dass er eine Position anzeigt, an welche das Fahrzeug (12) sich bewegen wird.

5. System nach Anspruch 3, wobei dieses ferner ein Kabelführungssystem umfasst, das zum Steuern der Position des Fahrzeugs (12) in dem Gehäuse angebracht ist.

6. System nach Anspruch 1, wobei dieses ferner folgendes umfasst:
eine Befestigungseinrichtung zum Anbringen des Fernsteuerungsmoduls (29, 53) an der Waffe (11).

7. System nach Anspruch 3, wobei die Signale von dem Fahrzeug (12) Videosignale aufweisen, welche Bilder von einem Sensor an dem Fahrzeug (12) darstellen.

8. System nach Anspruch 1, wobei die Fahrzeugsteuervorrichtung so konfiguriert ist, dass sie die Geschwindigkeit und die Richtung des Fahrzeugs (12) über die Bedienungsperson steuert.

9. System nach Anspruch 1, wobei dieses ferner eine Energieanzeige zum Anzeigen der für das Fahrzeug verbleibenden Energie (12) umfasst.

10. System nach Anspruch 2, wobei das Modul (29, 53) von dem Fahrzeug (12) empfangene Videobilder auf dem Anzeigeschirm anzeigen kann.

11. System nach Anspruch 1, wobei das Fahrzeug (12) über ein Kabelausgabesystem kabelgeführt ist, und wobei der elektronische Steuerkreis (44) mit dem Kabelausgabesystem gekoppelt ist.

## Revendications

1. Système de commande du mouvement d'un véhicule télécommandé (12), le système comprenant :
une arme portable (11) ; et
un module de télécommande (29, 53) pour commander le mouvement d'un véhicule (12), le module (29, 53) étant monté sur l'arme portable (11), le module (29, 53) comprenant :
un boîtier adapté à une utilisation en tant que poignée vers l'avant pour l'arme (11) ;
un circuit de commande électronique (44) monté à l'intérieur du boîtier pour commander le véhicule (12) ; et
un dispositif de commande de véhicule couplé au circuit de commande électronique (44) et monté sur le boîtier de sorte que l'opérateur du module (29, 53) peut simultanément actionner l'arme (11) et commander le véhicule (12).

2. Système selon la revendication 1, comprenant en outre un écran d'affichage monté sur le boîtier et mobile d'une position de rangement en affleurement contre le boîtier à une position de visualisation qui s'étend à partir du boîtier.

3. Système selon la revendication 1, comprenant en outre :
une antenne montée sur le boîtier et couplée au circuit de commande électronique (44), dans lequel l'antenne peut fonctionner pour transmettre des signaux au véhicule (12) et recevoir des signaux du véhicule (12).

4. Système selon la revendication 3, comprenant en outre un pointeur laser monté sur le boîtier, dans lequel le pointeur laser peut fonctionner pour indiquer une position vers laquelle le véhicule (12) va manoeuvrer.

5. Système selon la revendication 3, comprenant en outre un système de guidage filaire monté dans le boîtier pour commander la position du véhicule (12).

6. Système selon la revendication 1, comprenant en outre :
un élément de fixation pour monter le module de télécommande (29, 53) sur l'arme (11).

7. Système selon la revendication 3, dans lequel les signaux en provenance du véhicule (12) comprennent des signaux vidéo représentant des images en provenance d'un capteur sur le véhicule (12).

8. Système selon la revendication 1, dans lequel le dispositif de commande de véhicule est conçu pour commander la vitesse et la direction du véhicule (12) par l'opérateur.

9. Système selon la revendication 1, comprenant en outre un indicateur de puissance pour indiquer la puissance restante pour le véhicule (12).

10. Système selon la revendication 2, dans lequel le module (29, 53) est conçu pour afficher des images vidéo reçues du véhicule (12) sur l'écran d'affichage.

11. Système selon la revendication 1, dans lequel le véhicule (12) est guidé parfil par l'intermédiaire d'un système de distribution de fil, et le circuit de commande électronique (44) est couplé au système de distribution de fil.
